# EUROPÄISCHE PATENTANMELDUNG

(11) **EP 0 861 814 A2**
(43) Veröffentlichungstag der Anmeldung: **02.09.1998**
(21) Anmeldenummer: 98103289.9
(22) Anmeldetag: 25.02.1998
(51) Int. Cl.: C03C 25/02, D06N 3/04, E04B 1/94, E06B 9/40

(54) **Nicht brennbarer Verdunkelungsstoff und Verfahren zu dessen Herstellung**

(30) Priorität: 27.02.1997 DE 19708160
(71) Anmelder: LAUTERBURG & CIE AG, CH-3550 Langnau/Emmental (CH); Geissbühler & Co. AG, 3432 Lützelflüh (CH)
(72) Erfinder: Lauterburg, Niklaus, 3550 Langnau/Emmental (CH); Aderhold, Goetz-Armin, 8520 Uznach/SG (CH)
(74) Vertreter: Zipse & Habersack

(57) **Zusammenfassung**

Die Erfindung betrifft ein Verfahren zur Herstellung eines nicht brennbaren Stoffes und einen entsprechend hergestellten Stoff. Bei dem Verfahren wird ein Glasfasergewebe zumindest einseitig, vorzugsweise beidseitig mit einer Polyvinylacetat-Ethylen-Copolymerisat und ein daran adaptiertes Flammschutzmittel enthaltenden Beschichtung versehen.

## Beschreibung

Die Erfindung betrifft ein Verfahren zur Erzeugung eines nicht brennbaren Stoffes, insbesondere Verdunkelungsstoffes, insbesondere für den Innenbereich, mit welchem großflächige, rollfähige Innenbeschattungen hergestellt werden können. Diese Stoffe sind auch für die Erstellung nicht brennbarer vertikaler und horizontaler Raumteiler, Abtrennungen und Abdeckungen im Innenbereich geeignet, sowie für textile nicht brennbare bewegliche und lichtundurchlässige Fluchtwege im Innenbereich. Außerdem sind derartige Stoffe anwendbar für nicht brennbare lichtundurchlässige Isolierungen für den Bausektor im Innenbereich als Brandschutz. Schließlich sind die Stoffe in weicher Griffausführung für Schutzbekleidung geeignet.

Stoffe mit Grundgeweben auf Glasbasis sind hinlänglich bekannt, denn das Grundgewebe aus Glas erfüllt etliche Anforderungen an Stoffe oben genannter Art. Es kann großflächig hergestellt werden, ist rollfähig und erfüllt die geforderte Nichtbrennbarkeit bei 800 Grad C.

Durch die Beschichtung sollten neben der optionalen absoluten Lichtundurchlässigkeit und der Flammfestigkeit noch folgende weitere Produkteigenschaften erreicht werden:
- Beschichtbarkeit der Gewebeseite in vorgegebenem Farbton, so dass die Gewebestruktur erhalten und sichtbar bleibt. Diese Seite ist vorzugsweise gegen das Rauminnere anzubringen.
- In speziellen Ausführungsformen der Erfindung sollte die Möglichkeit des Erreichens eines hundertprozentigen Verdunkelungseffektes in Kombination mit einer zusätzlichen aluglänzenden Lichtabstrahlung gegen die Außenverglasungen hin gegeben sein.
- Flexible Farbgebungen für beide Produktseiten.

Der , insbesondere lichtundurchlässige, Stoff soll nach DIN 4102 A2 nicht brennbar sein. Außerdem soll er eine gleichmäßige Struktur aufweisen.

Diese Anforderungen werden durch einen nach einem Herstellungsverfahren gemäß Anspruch 1 hergestellten nichtbrennbaren Stoff gemäß Anspruch 11 gelöst. Vorteilhafte Weiterbildungen der Erfindung sind Gegenstand der Unteransprüche.

Der nach dem erfindungsgemäßen Verfahren hergestellte Stoff, insbesondere Markisenstoff ist nach DIN 4102 A2 nicht brennbar. Der Stoff hat eine äußerst gleichmäßige Struktur und ist somit für vielfältige Aufgabenbereiche, z.B. im Innen- und Dekobereich einsetzbar.

Für das nicht brennbare Grundgewebe werden vorzugsweise Spunglasgarne zu einem beidseitig gleichen Gewebe von 150 bis 250, vorzugsweise 200 gr/m² Rohgewicht verarbeitet. Derartige Glasgrundgewebe sind unter der Bezeichnung L1/1-Gewebe bekannt. Das Glasgrundgewebe hat eine äußerst homogene Struktur und ist damit ideal für den insbesondere dekorativen Bereich geeignet.

Um den Trägereigenschaften des Grundgewebes als auch den geforderten Produkteigenschaften möglichst weitgehend Rechnung zu tragen, wird zumindest die Außenbeschichtung des Stoffes in mehreren Schichten durchgeführt. In einer ersten Außenschicht wird auf das Glasfasergewebe eine erste Außenschicht aufgetragen die ein Polyvinylacetat-Ethylen-Copolymerisat (PEC) und ein daran adaptiertes Flammschutzmittel enthält. Durch diese erste Schicht wird der Stoff abgedichtet und zur Außenseite hin geglättet. Diese erste Außenschicht stellt somit eine Abdeckung des Gewebes dar, die die Zwischenräume zwischen den Gewebefilamenten ausfüllt und somit eine gleichmäßig glatte Basis für den nachfolgenden Schichtauftrag darstellt. Durch die Zugabe des Flammschutzmittels zu dem ohnehin schwerentflammbaren Polymer PEC wird die bereits beim Grundgewebe vorliegenden Flammfestigkeit beibehalten. Zusätzlich wird durch den Flammhemmstoff, bzw. das Flammschutzmittel die Schwerentflammbarkeit des Basispolymers PEC sogar unterstützt, d.h. beträchtlich verbessert. Als Flammschutzmittel können allen gängigen hierfür geeigneten Stoffe, wie z. B. Hexabromocyklododekan verwendet werden. Wenn als Flammschutzmittel Hexabromocyklododekan in Verbindung mit Aluminiumhydroxid verwendet wird, wird in Verbindung mit PEC eine außergewöhnlich hohe Flammbeständigkeit erzielt, die die Anforderungen der DIN 4102 A2 übertrifft. Das Gewichtsmischungsverhältnis liegt dabei vorzugsweise bei etwa 1,5:1 bis 2,5:1, insbesondere 2:1. Vorzugsweise enthält die Beschichtung auch Weißpigmente oder Füllstoffe wie Titandioxid.

Die Schicht wird möglichst dünn und somit vorzugsweise als Paste mittels Luftrakel in einer Menge von 20-30 g pro m² aufgetragen. Eine derartige Schicht kann ebenfalls vorzugsweise auf der Innenseite des Stoffes aufgetragen werden, d.h. der dem abzuschattenden Objekt zugewandten Seite.

Auf die Beschichtung wird bei einem Verdunklungsstoff außenseitig eine zweite Außenschicht in Art einer Schaumbeschichtung in einer Menge von 80 bis 100 g pro m² aufgebracht, die wiederum PEC und ein adaptiertes Flammschutzmittel enthält. Das Flammschutzmittel entspricht vorzugsweise dem/n Flammschutzmittel(n) der Grundbeschichtung. Weiterhin enthält diese zweite Außenschicht ein Schwarzpigment, welches dazu dient, den Stoff lichtundurchlässig zu machen. Aufgetragen wird der Schaum vorzugsweise mit Hilfe eines Walzenrakels. Anschließend wird die Schaumschicht getrocknet und verpresst. Durch das oben beschriebene Schaumaufbringungsverfahren wird eine Komprimierung der in der Schicht vorhandenen Pigmente und somit eine hohe Lichtundurchlässigkeit erzielt.

Damit die Schwarzschicht der zweiten Außenbeschichtung nach Außen hin nicht dominiert, wird vorzugsweise eine dritte Außenschicht aufgebracht, die wiederum PEC, ein adaptiertes Flammschutzmittel und wenigstens ein Deckpigment enthält, das das Schwarzpigment der darunterliegenden Schicht neutralisiert. Als geeignete Pigmente eignen sich z.B. Titandioxid (als Weißpigment). Es können nach Bedarf auch Farbpigmente verwendet werden. Die dritte Außenschicht wird vorzugsweise wiederum als Schaumbeschichtung in einer Menge von 80 bis 100 g pro m² aufgebracht, um eine hohe Deckkraft zu erzielen. Der Schaum wird hierbei vorzugsweise wiederum mittels Walzenrakel aufgetragen anschließend getrocknet und verpresst mit einem Pressdruck von vorzugsweise 5 bis 15 Tonnen pro m (Stoffbreite). Das Flammschutzmittel entspricht vorzugsweise dem/n Flammschutzmittel(n) der Grundbeschichtung.

Auf die zweite oder dritte Außenschicht wird nun ein Finish aufgebracht, welches ein trockenstellendes Polymer, z.B. Polyacrylat, daran angepaßte Flammschutzmittel und gegebenenfalls Farbpigmente aufweist. Vorzugsweise kann diese Schicht auch Pigmente aufweisen, die einen gewissen optischen Effekt verursachen. Als angepaßte Flammschutzmittel für das Polyacrylat eignet sich vorzugsweise eine Mischung aus Metalloxid- oder Glimmerpigmente und Melaminpulver. Um eine Rollbarkeit und Trennungsverhalten des Stoffes zu gewährleisten, kann das Finish auch Silikonzusätze enthalten. Diese äußere Schicht wird vorzugsweise als Paste mit einem Luftrakel in einer Menge zwischen 5 und 15 g pro m² aufgebracht. Das Finish kann weitere oberflächenreaktive Stoffe zur Beeinflussung der Griffigkeit, des Benetzungsverhaltens etc. aufweisen.

Die Erfindung wird nachfolgend anhand eines Beispieles beschrieben. Das Beispiel beschreibt einen Verdunklungsstoff, der eine Innenbeschichtung und vier Außenbeschichtungen enthält.

Der Stoff basiert auf einem Glasgewebe mit einem Gewicht von 150 bis 250 g pro m².

Sowohl auf die Innen- als auch auf die Außenseite des Gewebes wird eine Schicht aufgebracht, die folgende Zusammensetzung in Gewichtsteilen aufweist.
40 - 65 Gewichtsteile weichmacherfreies Polyvinylacetat-Ethylen-Copolymerisat,
10 - 30 Gewichtsteile Hexabromocylclododekan,
5 - 20 Gewichtsteile Aluminiumhydroxid und
0 - 4 Gewichtsteile Titandioxid.

Das Aluminiumhydroxid wird mit einer entsprechenden Menge an Wasser vordispergiert und als Dispersion der Beschichtungsmasse zugesetzt. Zusammen mit dem Hexabromocylclododekan bildet das Aluminiumhydroxid eine ideal an das PEC angepaßte Kombination von Flammschutzmitteln, die in überraschender Weise die bereits bestehende Schwerentflammbarkeit des PEC beträchtlich erhöhen.

Die Masse wird unter Verwendung eines geeigneten Verdickers wie zum Beispiel Ammoniumsalz, vernetzter Polyacrylsäuren als Paste angerührt und mittels eines Luftrakels in einer Auflage von ca. 10 - 30 g pro m², vorzugsweise um die 20 g pro m², auf das Grundgewebe aufgebracht. Das Grundgewebe kann vor der Aufbringung der Beschichtung entweder metallbeschichtet sein, wobei eine einseitig oder beidseitige Metallbeschichtung vorgesehen werden kann.

Auf die Außenseite wird nun eine zweite Außenschicht aufgebracht, welche die eigentliche Verdunklungsschicht bildet. Diese Schicht hat einen Anteil von 30 bis 50 Gewichtsteilen weichmacherfreiem PEC, 10 - 30 Gewichtsteile Hexabromocylclododekan, 5 - 20 Gewichtsteile Aluminiumhydroxid und 4 - 10 Gewichtsteile Schwarzpigment. Diese Masse wird mit einer geeigneten Menge an Wasser zum Dispergieren des Aluminiumhydroxids, Stabilisatoren und Verdickern versehen. Diese Masse wird aufgeschäumt auf ein Litergewicht von etwa 300 g/ltr und mittels eines Walzenrakels aufgetragen, leicht vorgetrocknet und anschließend in einem Preßspalt mit einem Gewicht von etwa 5 to pro lfmtr verpreßt. Die Basis dieser zweiten Außenschicht stimmt somit wieder mit der Basis der ersten Beschichtung überein, welche eine äußerst hohe Flammbeständigkeit aufweist. Diese Grundschicht aus Polymer und Flammschutzmitteln dient als Träger für das Schwarzpigment, welches durch das Schaumverfahren und die anschließende Verpressung in seiner Dichte stark komprimiert wird. Die Partikel des Schwarzpigments werden somit stark komprimiert auf die Oberfläche aufgebracht, weshalb eine hohe Pigmentdichte erzielt wird.

Auf diese zweite Außenbeschichtung wird nun eine dritte Außenbeschichtung aufgebracht, die wiederum im Grundmaterial, d.h. im Polymer und im Flammschutzmittel der Zusammensetzung der zweiten Außenbeschichtung entspricht und statt des Schwarzpigments ein Deckpigment enthält, welches beispielsweise aus Titandioxid, einem Weißpigment, gebildet sein kann. Es ist jedoch aus möglich, hier beliebige Anteile von Farbpigmenten zuzusetzen, um eine gewünschte Farbgebung bereits in dieser Abdeckschicht zu realisieren. Diese dritte Außenbeschichtung dient dazu, die schwarze Farbe der zweiten Außenbeschichtung abzudecken und somit eine beliebige Farbgebung zur Außenschicht, dem Finish, hin zu ermöglichen. Auch diese dritte Schicht, die beispielsweise 1 - 4 % Titandioxid enthält, wird als Schaumbeschichtung mit Vortrocknung und anschließendem Verpressen auf die zweite Außenbeschichtung aufgebracht. Die schwarze Farbe der zweiten Außenbeschichtung ist somit vollkommen neutralisiert und es kann anschließend eine vierte Außenbeschichtung, das Finish, aufgebracht werden.

Da das weichmacherfreie PEC der darunter befindlichen Schichten ein sehr klebriges Polymer ist, das dem Handling des Stoffes unter dem Gesichtspunkt Griffigkeit, Rollbarkeit etc. abträglich ist, wird die vierte Außenbeschichtung, das Finish, auf einer Polymer-Basis eines trockenstellenden Polymers, z.B. Polyacrylat aufgebaut. Damit auch dieses Finish eine Feuerbeständigkeit bekommt, wird ein dem trockenstellenden Polymer angepaßtes Flammschutzmittel verwendet, um die Flammbeständigkeit der darunter liegenden Schichten nicht durch eine mangelnde Flammbeständigkeit des Finishs zu beeinträchtigen. Als Flammschutzmittel für Polyacrylat wird hier eine Mischung von Metalloxid-Glimmer-Pigment und Melaminpulver verwendet. Diese Schicht enthält:

50 - 80 Gewichtsteile selbstvernetzendes Polyacrylat, 5 - 15 Gewichtsteile Metalloxid-Glimmer-Pigment, 5 - 15 Gewichtsteile Melaminpulver und notwendige Anteile an Entschäumern und Verdickern. Zusätzlich können in dieser Schicht Silikonbestandteile enthalten sein, um die Trennbarkeit der Finish-Schicht zu verbessern. Diese Schicht wird als Paste mittels Luftrakel in einer Trockenauflage von ca. 5 - 15 g pro m² aufgetragen.

## Patentansprüche

1. Verfahren zur Herstellung eines nicht brennbaren Stoffes, bei dem ein Glasfasergewebe zumindest einseitig, insbesondere beidseitig mit einer Beschichtung versehen wird, die Polyvinylacetat-Ethylen-Copolymerisat und ein daran adaptiertes Flammschutzmittel enthält.

2. Verfahren nach Anspruch 1,
dadurch gekennzeichnet,
daß als Flammschutzmittel Hexabromocylclododekan verwendet wird.

3. Verfahren nach Anspruch 2,
dadurch gekennzeichnet,
daß als Flammschutzmittel eine Kombination aus Hexabromocylclododekan und Aluminiumhydroxid verwendet wird.

4. Verfahren nach Anspruch 3,
daß das Gewichtsverhältnis von Hexabromocylclododekan zu Aluminiumhydroxid 1,5:1 bis 2,5:1, insbesondere 2:1 beträgt.

5. Verfahren nach einem der vorhergehenden Ansprüche zur Herstellung eines Verdunklungsstoffes,
dadurch gekennzeichnet,
daß auf die Beschichtung außenseitig eine zweite Außenschicht aufgetragen wird, die Polyvinylacetat-Ethylen-Copolymerisat, ein daran adaptiertes Flammschutzmittel und wenigstens ein Schwarzpigment zur Lichtabdeckung enthält.

6. Verfahren nach Anspruch 5,
dadurch gekennzeichnet,
daß auf die zweite Außenschicht eine dritte Außenschicht aufgetragen wird, die Polyvinylacetat-Ethylen-Copolymerisat, ein daran adaptiertes Flammschutzmittel und wenigstens ein Farbpigment, z.B. Weißpigment zur Abdeckung und Neutralisierung der zweiten Außenschicht enthält.

7. Verfahren nach Anspruch 5 oder 6,
dadurch gekennzeichnet,
daß die zweite und/oder dritte Außenschicht als Schaumschicht in einer Menge von etwa 70 bis 159 gr/m² aufgebracht, vorgetrocknet und anschließend in einem Walzenspalt verpreßt wird.

8. Verfahren nach einem der Ansprüche 5 bis 7,
dadurch gekennzeichnet,
daß auf die zweite oder dritte Außenschicht ein Finish aufgetragen wird, das ein trockenstellendes Polymer, ein daran adaptiertes Flammschutzmittel und gegebenenfalls Farb- bzw. Effektstoffe aufweist.

9. Verfahren nach Anspruch 8,
dadurch gekennzeichnet,
daß als trockenstellendes Polymer Polyacrylat verwendet wird.

10. Verfahren nach Anspruch 9,
dadurch gekennzeichnet,
daß als Flammschutzmittel eine Mischung aus Metalloxid und Melaminpulver verwendet wird.

11. Stoff, hergestellt nach einem der vorhergehenden Ansprüche.
